Europäisches Patentamt

European Patent Office

Office européen des brevets

(19)

(11) **EP 1 023 843 B1**

(12) **EUROPÄISCHE PATENTSCHRIFT**

(45) Veröffentlichungstag und Bekanntmachung des Hinweises auf die Patenterteilung:
**22.06.2005 Patentblatt 2005/25**

(51) Int Cl.[7]: **A23L 1/30**, A23L 1/302, A23L 1/304, A23L 1/305, A61K 31/185

(21) Anmeldenummer: **00101753.2**

(22) Anmeldetag: **28.01.2000**

(54) **Zusammensetzung zur Leistungsförderung bei sportlicher Tätigkeit, ihre Herstellung und Verwendung als diätetisches Lebensmittel**

Composition for improving performance during sportive activities, its production and use as dietetic food product

Composition pour l'amélioration des performances lors d' activités sportives , sa production et son utilisation comme produit alimentaire diététique

(84) Benannte Vertragsstaaten:
**AT BE CH CY DE DK ES FI FR GB GR IE IT LI LU MC NL PT SE**

(30) Priorität: **29.01.1999 DE 19903560**
**24.02.1999 DE 29903306 U**

(43) Veröffentlichungstag der Anmeldung:
**02.08.2000 Patentblatt 2000/31**

(73) Patentinhaber: **Sportmedizin Team Vertriebs GmbH**
**9442 Berneck (CH)**

(72) Erfinder: **Apfelbaum, Udo**
**9442 Berneck (CH)**

(74) Vertreter: **Appelt, Christian W. et al**
**FORRESTER & BOEHMERT**
**Anwaltssozietät**
**Pettenkoferstrasse 20-22**
**80336 München (DE)**

(56) Entgegenhaltungen:
| | |
|---|---|
| **EP-A- 0 288 447** | **EP-A- 0 567 433** |
| **EP-A- 0 641 562** | **EP-A- 0 705 542** |
| **EP-A- 0 747 395** | **EP-A- 0 797 992** |
| **EP-A- 0 875 155** | **EP-A- 0 891 719** |
| **WO-A-91/09524** | **WO-A-97/49304** |
| **US-A- 5 221 668** | **US-A- 5 576 351** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine Zusammensetzung zur Leistungsförderung bei sportlicher Tätigkeit sowie deren Herstellung und Verwendung als diätetisches Lebensmittel. In an sich bekannter Weise enthält die Zusammensetzung Kohlenhydrate sowie folgende Aminosäuren: Alanin, Lysin, Phenylalanin, Glutaminsäure, Methionin, Glycin, Ornithin und einer das Wirkungsspektrum in äquivalenter Weise wie Serin beeinflussenden Komponente (WO 91 09524 A, US-A-5576351). Nach dem Stand der Technik werden die Zusammensetzungen mit dem Aminosäurengemisch als Immunitätsstimulatoren verwendet. Gemische von Kohlenhydraten und bestimmte Aminosäuren sind auch in energiespendenden Getränken bekannt (WO 97 49304).

Bei körperlicher Betätigung und insbesondere beim Hochleistungssport verbraucht der Körper vermehrt Energie. Als körpereigene Energiereserven stehen der Glukosespeicher und im Körper eingelagertes Fett zur Verfügung. Die Energiereserven des Körpers werden durch die Nahrungsaufnahme insbesondere von Kohlenhydraten und Fett ergänzt. Bei starker körperlicher Betätigung ergibt sich jedoch das Problem, daß die körpereigenen Fettreserven nicht unmittelbar zur Energiegewinnung zur Verfügung stehen und auch über die Nahrung zugeführte Kohlenhydrate und Fette erst im Körper verfügbar gemacht werden müssen. Bei der Zufuhr von Kohlenhydraten tritt darüber hinaus nach 30 bis 40 Min. ein "Insulin-Loch" auf. Dies kann aufgrund zeitweiser unzureichender Energieversorgung der Muskeln zu einem sogenannten "Hungerast" führen. Zudem werden bei körperlicher Betätigung im allgemeinen über den Schweiß vermehrt Spurenelemente bzw. Mineralstoffe ausgeschieden. Darüber hinaus wird der Aminosäurepool des Körpers beim Leistungssport und bei Dauerbelastungen stark angegriffen. Infolge dieser Effekte tritt z. B. ein Leistungsabfall, Müdigkeit, mangelnde Regenerationsfähigkeit und eine Schwächung des Immunsystems auf.

Eine Aufgabe der vorliegenden Erfindung war es daher eine Zusammensetzung bereitzustellen, die den Körper schnell mit möglichst viel Energie versorgt, körpereigene Energiereserven leichter verfügbar macht und dem Körper leistungssteigemde Substanzen zur Verfügung stellt, ohne daß bei ihrer Aufnahme ein Leistungsabfall durch das "Insulin-Loch" auftritt.

Es wurde nun gefunden, daß eine als Lebensmittel geeignete Zusammensetzung aus MCT, Kohlenhydraten sowie bestimmten Aminosäuren diese Aufgabe löst. Die erfindungsgemäße Zusammensetzung enthält somit 50 bis 70 Gew.-%, bevorzugt ca. 60 Gew.-% Triglyceride von Fettsäuren mittlerer Kettenlänge "MCT" und 5 bis 15 Gew.-%, bevorzugt ca. 10 Gew.-% Kohlenhydrate, insbesondere Maltodextrin, jeweils bezogen auf das Gesamtgewicht der Zusammensetzung.

Der Gegenstand der vorliegenden Erfindung ist somit eine Zusammensetzung zur Leistungsförderung bei sportlicher Tätigkeit, enthaltend MCT, Kohlenhydrate sowie folgende Aminosäuren: Alanin, Lysin, Phenylalanin, Glutaminsäure, Methionin, Serin oder eine analoge Komponente, Glycin und Omithin.

Die unter der Bezeichnung MCT ("medium-chain triglycerides") bekannte Verbindungsklasse umfaßt Triglyceride von Fettsäuren mittlerer Kettenlänge, wobei unter Fettsäuren mittlerer Kettenlänge insbesondere $C_6$-$C_{12}$-Fettsäuren und bevorzugt $C_8$-$C_{10}$-Fettsäuren verstanden werden. MCT wird ungespalten durch die Darmwand resorbiert und ist Kohlenhydraten durch seinen drei- bis vierfach höheren Brennwert für die Energieversorgung des Körpers überlegen. Außerdem steht die Energie unter Umgehung der "Insulin-Pumpe" zur Verfügung, so daß praktisch kein "Hungerast" auftritt. Die Energie steht nach ca. 2 bis 3 Minuten bis zu 3 bis 4 Stunden zur Verfügung.

Zur Unterstützung der Resorption von MCT und auch der ausreichenden Oxidation von MCT enthält die Zusammensetzung zusätzlich Kohlenhydrate, bevorzugt in Form von Maltodextrin. Hierbei hat sich überraschend gezeigt, daß Kohlenhydrate, obwohl sie bevorzugt nur in geringen Mengen zugesetzt werden, zu einer erheblichen Leistungsförderung gegenüber der reinen Zufuhr von MCT führen. Dabei kann die Menge der zugesetzten Kohlenhydrate so gering gewählt sein, daß keine Hyperinsulinämie ausgelöst wird. Damit kann die erfindungsgemäße Zusammensetzung auch vor der sportlichen Aktivität zugeführt werden, ohne die Gefahr, daß durch die Hyperinsulinämie später eine Hypoglykämie gefördert wird.

Außerdem trägt die erfindungsgemäße Zusammensetzung durch ihre spezielle Kombination der Inhaltsstoffe schon während der ersten Belastungsphase zur Energiegewinnung bei, d. h. schon im Zustand noch hoher Glykogenvorräte der Muskulatur. Hierbei ist auch entscheidend, daß die Fettoxidation sehr früh in Gang gesetzt wird und es dadurch zum Einspareffekt von Muskelglykogen kommt. Dieser Effekt wird durch die erfindungsgemäße Kombination der Inhaltsstoffe erzielt. Eine einzige diätetische Variation aus nur MCT oder Kohlenhydraten kurz vor der Belastung ist für eine solche Umstellungsphase nicht ausreichend.

Die beiden im Muskelgewebe vorliegenden Substanzen Kreatin und Carnitin spielen im Energiehaushalt des Körpers eine wichtige Rolle. Kreatin liegt im Muskel als Energiespeicher vor, wo es in reversibler Reaktion mit ATP als Energieempfänger für den Aufbau des energiereichen Kreatinphosphats wirkt und als Energiespender für die Regenerierung des verbrauchten ATP dient. Carnitin dient vor allem im Fettsäure-Stoffwechsel als Überträger für Acyl-Gruppen durch die Mitochondrien-Membran hindurch. Da die orale Zufuhr von L-Carnitin und Kreatin die körpereigene Produktion dieser Substanzen stoppt, bietet die erfindungsgemäße Zusammensetzung dem Körper die für die Synthese dieser Verbindungen benötigten Aminosäuren an, damit er bei steigendem Bedarf sofort Carnitin und Kreatin bilden kann.

Zur Carnitin-Synthese benötigt der Körper Methionin und Lysin, die in der erfindungsgemäßen Zusammensetzung vorliegen. Darüber hinaus werden Vitamin C und Vitamin E sowie Niacin benötigt, die entweder zusätzlich in der Zusammensetzung enthalten sein können, oder beispielsweise dem Körper anderweitig zugeführt werden können.

Die vom Körper zur Kreatin-Synthese benötigten Aminosäuren bzw. deren Vorstufe sind ebenfalls in der erfindungsgemäßen Zusammensetzung enthalten. Zur Kreatin-Synthese benötigt der Körper Glycin, Methionin und Arginin, wobei in der vorliegenden Zusammensetzung Arginin durch Ornithin ersetzt ist, da Arginin die Resorption von Lysin behindert und Herpes verursachen kann. Ornithin wird sehr leicht vom Körper umgewandelt und stellt somit auch alle positiven Eigenschaften von Arginin zur Verfügung.

Sollten die genannten Aminosäuren zur Kreatin- oder Carnitin-Synthese vom Körper gerade nicht benötigt werden, so stehen diese, genau wie die anderen in der erfindungsgemäßen Zusammensetzung ebenfalls enthaltenen Aminosäuren, zur allgemeinen Steigerung der Leistungsfähigkeit zur Verfügung. Insbesondere haben die in der Zusammensetzung enthaltenen Aminosäuren einen positiven Einfluß auf die Regeneration des Körpers, insbesondere die Reorganisation und Reparation, auf das Immunsystem und insbesondere eine hiermit verbundene Proliferation, die Cytocine und Prostaglandine, auf den Energiestoffwechsel des Körpers, die Oxidation und die Gluconeogenese sowie die beteiligten Verbindungen Kreatin und Adenosin, auf die Schutzfunktion des Körpers beispielsweise bei der Ammoniakentgiftung, als Radikalfänger und bei der Blutgerinnung, auf die Adaptation des Körpers und hiermit verbundene Enzyme, Hormone und Neurotransmitter, auf die Zellfunktionen und hiermit verbundene Nukleotide und Enzyme sowie auf die Bausubstanzen des Körpers wie die Strukturproteine und Regulatorproteine.

Neben den obengenannten Aminosäuren für die Kreatin- und Carnitin-Synthese enthält die erfindungsgemäße Zusammensetzung weitere vorteilhafte Aminosäuren.

Alanin dient als Vorstufe für die körpereigene Synthese von Glukose und trägt zur Umgehung der Insulin-Pumpe bei. Phenylalanin besitzt eine bessere Resorption als Tyrosin oder Dopamin, unterbindet das Hungergefühl und trägt zur Wachheit bei.

Glutaminsäure dient als Zusatzenergie unter Umgehung der Insulin-Pumpe. Serin hält oder erhöht den Blutzuckerspiegel, wobei im Rahmen der erfindungsgemäßen Zusammensetzung das ausgewogene Verhältnis von Serin zu Glycin wichtig ist, um die Remetabolisierung von Methionin zu unterstützen. Außerdem wird die weitere Metabolisierung von Homocystein zu Cystein unterstützt und durch die zusätzliche Methioningabe die laufende Synthese von Kreatin und Carnitin und damit die aktuelle Stoffwechselsituation und die Fettsäuremetabolisierung unterstützt.

Durch die besondere erfindungsgemäße Kombination der Aminosäuren wird nicht nur supplementiert oder substituiert sondern das Stoffwechselgeschehen adäquat unterstützt, wodurch aus biochemischer Sicht Übersättigungen oder Hemmreaktionen an enzymatischen Vorgängen vorgebeugt wird.

Bevorzugt enthält die erfindungsgemäße Zusammensetzung keine Asparaginsäure, da diese am Zitronensäurezyklus beteiligt ist und sich somit nachteilig auf den Glukosespeicher des Körpers auswirken kann.

In einer weiteren bevorzugten Ausführungsform enthält die erfindungsgemäße Zusammensetzung auch Taurin. Diese Aminosäure findet sich natürlich im Körper im Herzmuskel und in der Gallensäure. Sie trägt zur besseren Verträglichkeit von MCT bei und beugt Muskelfaserrissen vor. Außerdem trägt Taurin als Membranstabilisator sowohl zur Förderung der kardialen Leistungsfähigkeit wie auch zur Unterstützung der elektrophysiologischen zentralnervösen Prozesse bei (EP-A-0 288 447, EP-A-0 797 992).

Vorteilhaft enthält die erfindungsgemäße Zusammensetzung je 100 g ca. 1.000 mg Alanin, ca. 820 mg Lysin, ca. 900 Phenylalanin, ca. 1.100 mg Glutaminsäure, ca. 690 mg Methionin, ca. 300 mg Serin, ca. 280 mg Glycin, ca. 800 mg Ornithin und optional ca. 600 mg Taurin. Die Aminosäuren können mikroverkapselt vorliegen.

Bevorzugt enthält die erfindungsgemäße Zusammensetzung neben den obengenannten Verbindungen zusätzlich Vitamine und/oder Mineralstoffe, besonders bevorzugt jeweils in 1- bis 3facher Menge des empfohlenen Tagesbedarfs pro 100 g der Zusammensetzung.

Bei den Vitaminen handelt es sich insbesondere um Vitamin $B_6$, Vitamin C und Vitamin E. Vitamin $B_6$ ist dabei besonders wichtig, um die Aminosäuren für den Körper verfügbar zu machen. Vitamin C dient auch als Konservierungsmittel.

Bei den Mineralstoffen handelt es sich insbesondere um Kalium, Zink, Chrom und Magnesium, wobei diese Elemente jeweils in Form eines physiologisch verträglichen Salzes vorliegen. Beispielsweise eignen sich Chrom(III)-chlorid, Kaliumcitrat, Magnesiumcitrat und Zinkcitrat.

An Zink besteht ein erhöhter Bedarf im Leistungssport. Darüber hinaus hat dieses Element durch die Bildung von Chelatverbindungen eine günstige Wirkung auf Aminosäuren, wirkt als Antioxidans und besitzt eine Wirkung auf Insulin und Prostaglandine. Magnesium hat eine positive Wirkung auf ATP, ADP, die Glukolyse und auf die Öffnung der Zellen für Glukose. Außerdem weist Magnesium eine Insulin-Wirkung auf. Chrom weist sowohl bei Hypo- als auch Hyperglykämie eine positive Wirkung auf die Glukosespeicher des Körpers auf.

Die Zusammensetzung kann drüber hinaus für Lebensmittel geeignete Zusatzstoffe wie beispielsweise Fette, wie pflanzliche Fette, Säuerungsmittel, natürliche oder künstliche Süßstoffe, wie Saccharin und Cyclamat, Aromastoffe und/oder Farbstoffe enthalten.

Ein weiterer Gegenstand der Erfindung ist ein Verfahren zur Herstellung der erfindungsgemäßen Zusammensetzung, bei dem die obengenannten Stoffe gegebenenfalls zusammen mit den weiteren Zusatzstoffen gemischt und falls gewünscht geformt und portioniert werden.

Beispielsweise kann die Zusammensetzung in Packungen zu je 20 g abgefüllt werden. Der empfohlene Tagesverbrauch solcher 20-g-Packungen liegt dann bei beispielsweise höchstens 3 Packungen.

Die erfindungsgemäße Zusammensetzung eignet sich insbesondere zur Leistungsförderung, vor allem bei großer körperlicher Anstrengung und/oder als diätetisches Lebensmittel. Daher erstreckt sich die vorliegende Erfindung auch auf die Verwendung der erfindungsgemäßen Zusammensetzung zur Leistungsförderung und/oder als diätetisches Lebensmittel.

Die Vorteile der Erfindung liegen vor allem in einer schnellen und hohen Energiezufuhr für den Körper, wobei durch die gleichzeitige Kombination mit für die Kreatin- und Carnitin-Synthese notwendigen Aminosäuren auch die körpereigenen Energiereserven leichter verfügbar gemacht werden. Die Energie wird unter Umgehung der Insulin-Pumpe zur Verfügung gestellt, so daß praktisch kein "Hungerast" auftritt. Die Energie steht innerhalb kürzester Zeit für einen langen Zeitraum zur Verfügung. Außerdem wird bei Aufnahme der Zusammensetzung kurz vor der Belastung die Fettoxidation sehr früh in Gang gesetzt, so daß es zur Einsparung von Muskelglykogen und damit zu einer Erhöhung der möglichen Belastungsdauer kommt.

Damit stellt die vorliegende Erfindung eine Zusammensetzung zur Verfügung, die in sehr komplexer Weise die wichtigsten wohlbekannten Versorgungsprobleme bei intensivem Sport in präventiver Weise durch Zufuhr vor und während der Aktivität löst und durch Verabreichung in der Nachbelastungsphase die reparativen regenerativen Prozesse unterstützt, um die Leistungsfähigkeit rasch wiederherzustellen.

Das folgende Beispiel gibt eine besonders bevorzugte Ausführungsform der vorliegenden Erfindung wieder, ohne sie darauf zu beschränken.

**Beispiel**

Die Inhaltsstoffe der erfindungsgemäßen Zusammensetzung wurden gemäß der folgenden Tabelle gemischt und in Packungen zu je 20 g abgefüllt.

**Aminosäuren:**

|  | mg |
|---|---|
| L-Alanin, oral | 1.000 |
| L-Glutaminsäure, oral | 1.100 |
| Glycin, oral | 280 |
| L-Lysin | 820 |
| L-Methionin | 690 |
| L-Omithin, HCl | 800 |
| L-Phenylalanin, oral | 900 |
| L-Serin, oral | 300 |
| Taurin | 600 |
|  |  |
| Gewichtsanteil Aminsäuren | 6.490 |
| Überzug mit Monomuls 90-35 | 10.000 |

**Vitamine:**

| $B_6$, HCl | 2,1 |
|---|---|
| C | 70 |
| E (natürliches Tocopherol Isomerengemisch, 30%ig) | 130 |

(fortgesetzt)

| Gewichtsanteil Vitamine | 202,1 |
|---|---|

**Mineralstoffe:**

| Cr(III)-Chlorid, 6 $H_2O$ (33% Cr) | 0,2 |
|---|---|
| K-Citrat, $H_2O$ (36% K) | 7.000 |
| Mg-Citrat, (10% Mg) | 3.100 |
| Zn-Citrat, (33% Zn) | 30 |
| Gewichtsanteil Mineralstoffe | 10.130,2 |

**Basisformulierung:**

| Delios V (MCT-Öl) | 62.977,7 |
|---|---|
| Maltodextrin | 7.000 |
| Aroma (Typ Banane) | 200 |
| Süßstoff (Saccharin/Cyclamat) | 200 |
| Fett HRI 84 (pflanzliches Fett) | 2.800 |
| Gesamtanteil Basisformulierung | 73.177,7 |
| Masse gesamt | 100.000 |

**Patentansprüche**

1. Zusammensetzung zur Leistungsförderung bei sportlicher Tätigkeit, enthaltend Kohlenhydrate sowie folgende Aminosäuren: Alanin, Lysin, Phenylalanin, Glutaminsäure, Methionin, Glycin, Ornithin und Serin, **dadurch gekennzeichnet, daß** sie 5 bis 15 Gew.-% Kohlenhydrate, bevorzugt Maltodextrin, und weiterhin 50 bis 70 Gew.-% Triglyceride von Fettsäuren mittlerer Kettenlänge "MCT", jeweils bezogen auf das Gesamtgewicht der Zusammensetzung, enthält.

2. Zusammensetzung nach Anspruch 1, zusätzlich enthaltend Taurin.

3. Zusammensetzung nach Anspruch 2, enthaltend je 100 g der Zusammensetzung ca. 1.000 mg Alanin, ca. 820 mg Lysin, ca. 900 mg Phenylalanin, ca. 1.100 mg Glutaminsäure, ca. 690 mg Methionin, ca. 300 mg Serin, ca. 280 mg Glycin, ca. 800 mg Ornithin und ca. 600 mg Taurin.

4. Zusammensetzung nach einem der Ansprüche 1 bis 3, zusätzlich enthaltend Vitamine und/oder Mineralstoffe.

5. Zusammensetzung nach Anspruch 4, enthaltend Vitamin $B_6$, Vitamin C und Vitamin E.

6. Zusammensetzung nach Anspruch 4 oder 5, enthaltend Kalium, Zink, Chrom und Magnesium jeweils in Form eines Salzes.

7. Zusammensetzung nach einem der Ansprüche 1 bis 6, zusätzlich enthaltend Niacin.

8. Verfahren zur Herstellung einer Zusammensetzung nach einem der Ansprüche 1 bis 7, worin die genannten Stoffe im **gekennzeichneten** Gewichtsverhältnis gegebenenfalls zusammen mit weiteren Zusatzstoffen gemischt und, falls gewünscht, geformt und portioniert werden.

9.  Verwendung einer Zusammensetzung nach einem der Ansprüche 1 bis 7 als diätetisches Lebensmittel.

**Claims**

1.  Composition for increasing the performance during sports containing carbohydrates as well as the following amino acids: alanine, lysine, phenylalanine, glutamine acid, methionine, glycine, ornithine and serine, **characterized in that** it contains 5 to 15 weight percent carbohydrates, preferably maltodextrine, and furthermore 50 to 70 weight percent triglycerides of fatty acids of medium chain-length "MCT", each referring to the total weight of the composition.

2.  Composition according to claim 1, additionally containing taurine.

3.  Composition according to claim 2 containing per 100 g of the composition about 1000 mg alanine, about 820 mg lysine, about 900 mg phenylalanine, about 1100 mg glutamine acid, about 690 mg methione, about 300 mg serine, about 280 mg glycine, about 800 mg ornithine and about 600 mg taurine.

4.  Composition according to any one of claims 1 to 3, additionally containing vitamins and/or minerals.

5.  Composition according to claim 4, containing vitamin B6, vitamin C and vitamin E.

6.  Composition according to claim 4 or 5, containing potassium, zinc, chromium and magnesium, each in the form of a salt.

7.  Composition according to any one of claims 1 to 6, additionally containing niacine.

8.  Process for producing a composition according to any one of claims 1 to 7 wherein said ingredients in said ratios are mixed, if necessary, with other additives, and, if desired, formed and portioned.

9.  Use of a composition according to any one of claims 1 to 7 as dietetic foodstuff.

**Revendications**

1.  Composition pour l'amélioration des performances dans les activités sportives, contenant des hydrates de carbone et les aminoacides suivants : alanine, lysine, phénylalanine, acide glutamique, méthionine, glycine, ornithine et sérine,
    **caractérisée en ce qu'**
    elle contient de 5 à 15 % en poids d'hydrates de carbone, de préférence de la maltodextrine, et en outre de 50 à 70 % en poids de triglycérides d'acides gras de longueur de chaîne moyenne "MCT", rapportés à chaque fois au poids total de la composition.

2.  Composition selon la revendication 1, contenant en outre de la taurine.

3.  Composition selon la revendication 2, contenant, pour 100 g de la composition, env. 1000 mg d'alanine, env. 820 mg de lysine, env. 900 mg de phénylalanine, env. 1100 mg d'acide glutamique, env. 690 mg de méthionine, env. 300 mg de sérine, env. 280 mg de glycine, env. 800 mg d'ornithine et env. 600 mg de taurine.

4.  Composition selon l'une des revendications 1 à 3, contenant en outre des vitamines et/ou des substances minérales.

5.  Composition selon la revendication 4, contenant de la vitamine $B_6$, de la vitamine C et de la vitamine E.

6.  Composition selon la revendication 4 ou 5, contenant du potassium, du zinc, du chrome et du magnésium, à chaque fois sous la forme d'un sel.

7.  Composition selon l'une des revendications 1 à 6, contenant en outre de la niacine.

8. Procédé de préparation d'une composition selon l'une des revendications 1 à 7, dans lequel les substances citées sont mélangées suivant le rapport de poids indiqué, le cas échéant conjointement avec d'autres additifs, et - si on le souhaite - façonnées et proportionnées.

9. Utilisation d'une composition selon l'une des revendications 1 à 7, comme produit alimentaire diététique.